## Europäisches Patentamt
## European Patent Office
## Office européen des brevets

(19)

(11) Veröffentlichungsnummer: **0 216 796**
**B1**

(12) # EUROPÄISCHE PATENTSCHRIFT

(45) Veröffentlichungstag der Patentschrift:
**19.04.89**

(21) Anmeldenummer: **86901041.3**

(22) Anmeldetag: **05.02.86**

(86) Internationale Anmeldenummer:
**PCT/DE 86/00036**

(87) Internationale Veröffentlichungsnummer:
**WO 86/04842 (28.08.86 Gazette 86/19)**

(51) Int. Cl.⁴: **B 23 B 31/44,** B 23 B 31/20

(54) **WERKZEUGHALTER OD.DGL.**

(30) Priorität: **13.02.85 DE 3504905**

(43) Veröffentlichungstag der Anmeldung:
**08.04.87 Patentblatt 87/15**

(45) Bekanntmachung des Hinweises auf die Patenterteilung:
**19.04.89 Patentblatt 89/16**

(84) Benannte Vertragsstaaten:
**AT BE CH DE FR GB IT LI LU NL SE**

(56) Entgegenhaltungen:
**DE-A-1 900 080**
**GB-A-419 860**
**GB-A-1 160 769**

(73) Patentinhaber: **J. Kühn GmbH & Co.**
**Präzisionswerkzeug KG, Köhler Strasse 41,**
**D-4270 Dorsten 11 (DE)**

(72) Erfinder: **JOHNE, Frank, Hopener Strasse 24,**
**D-2842 Lohne (DE)**

(74) Vertreter: **Koscholke, Gotthold, Dr.- Ing.,**
**Rheinallee 147, D-4000 Düsseldorf 11 (DE)**

LIBER, STOCKHOLM 1989

EP 0 216 796 B1

## Beschreibung

## Technisches Gebiet

Die Erfindung bezieht sich auf einen Werkzeughalter od. dgl nach dem Oberbegriff des Anspruchs 1.

## Stand der Technik

Es ist ein als Fräsdorn ausgebildeter Werkzeughalter dieser Art bekannt (DE-OS-1 900 080), bei dem ein Grundkörper hinter einem Sitz für eine konische Hülse als bis zum Ende durchgehend zylindrischer Schaft ausgebildet ist. Dieser reicht in einen zylindrischen Bohrungsteil der Arbeitsspindel hinein, der sich an die kegelige Aufnahme der Spindel nach hinten anschließt. Dieser zylindrische Bohrrungsteil ist weniger genau bearbeitet als die kegelige Aufnahme und soll keinerlei Zentrier- oder Führungsfunktionen bezüglich des Fräsdornes übernehmen.

Ein solcher Fräsdorn erfordert wegen des zylindrischen Schaftes eine entsprechend angepaßte Spindelausbildung mit zylindrischem Bohrungsteil hinter der kegeligen Aufnahme. Durch den zylindrischen Schaft des Fräsdornes ergibt sich im Vergleich zu einem konischen Körper eine verminderte Steifigkeit. Weil der Fräsdorn praktisch nur in einem einzigen begrenzten Bereich, nämlich in der am übergang vom Schaft zum Flansch gelegenen Partie, fest eingespannt sein kann, während das Ende des zylindrischen Schaftes nicht besonders zentriert oder geführt sein soll, ist eine ausreichende Rundlaufgenauigkeit nicht gewährleistet.

## Darstellung der Erfindung

Aufgabe der Erfindung ist es, bestehende Nachteile und Unzulänglichkeiten zu überwinden und einen Werkzeughalter od.dgl. der eingangs genannten Art zu schaffen, bei dem die Verbindung zwischen dem Schaftteil und der Arbeitsspindel gegenüber der erläuterten vorbekannten Ausführung eine erhöhte Steifigkeit aufweist und bei dem zugleich eine hohe Rundlaufgenauigkeit vorhanden ist, wobei ferner der Schaftteil selbst keine nennenswerte Steifigkeitseinbuße im Vergleich zu sonst üblichen Werkzeughaltern erleidet. Weiterhin soll auch eine besonders wirksame Anlage des Flanschteiles an der stirnseitigen Plan Fläche einer Arbeitsspindel erzielt werden. Der Werkzeughalter soll bei alledem möglichst universell einsetzbar sein, d.h. keine Sonderausbildung der Arbeitsspindel erfordern, wie es bei der bekannten Ausführung der Fall ist, sondern er soll bei verschiedenen Kegel- bzw. Spannsystemen verwendbar sein, z. B. für die genormten Ausführungen von Kegeln, sei es mit Endzapfen oder ohne Endzapfen, und er soll besonders auch bei Maschinen mit automatischem Werkzeugwechsel einsetzbar sein. Weitere damit im Zusammenhang stehende Probleme, mit denen sich die Erfindung befaßt, ergeben sich aus der jeweiligen Erläuterung der aufgezeigten Lösung.

Bei einem Werkzeughalter der eingangs genannten Art sieht die Erfindung vor, daß im hinteren Bereich des Schaftteiles eine zweite zylindrische Führung für einen zweiten, an einem weiteren elastischen Widerlager abstützbaren Konusring vorhanden ist.

Ein solcher Werkzeughalter zeichnet sich durch eine Reihe vorteilhafter Eigenschaften aus. Der Grundkörper erfährt an zwei Stellen der kegeligen Aufnahmebohrung der Arbeitsspindel eine feste und genaue Einspannung im Bereich des größten und kleinsten Durchmessers, so daß sich eine große Steifigkeit der Verbindung von Schaftteil und Arbeitsspindel ergibt. Die Schwingungsanfälligkeit und die Ratterneigung werden erheblich herabgesetzt. Weil ein Konusring unabhängig von dem anderen verschiebbar bzw. einstellbar ist, wird dies mit hoher Zuverlässigkeit erreicht, wobei auch Toleranzen oder Fehler im Kegelwinkel der Aufnahme der Arbeitsspindel ausgeglichen werden können. Die erwünschte Anlage des Flansches des Werkzeughalters an der stirnseitigen Planfläche der Arbeitsspindel kommt sicher zustande. Es wird bei alledem auch eine hohe Rundlaufgenauigkeit erzielt. Der Schaftteil kann wie bei herkömmlichen Werkzeugen dimensioniert werden und hat deshalb auch selbst eine hohe Steifigkeit.

Der angegebene Werkzeughalter ist darüber hinaus für die verschiedensten Einsatzfälle geeignet. Er erfordert keine spezielle Gestaltung der Arbeitsspindel. Vielmehr läßt er sich ohne jede Schwierigkeit so ausbilden, daß er bei den gängigen vorhandenen Kegeln, Spannsystemen und Werkzeugwechseleinrichtungen verwendbar ist. Die bedingt lediglich die bei jedem anderen Werkzeug auch erforderliche angepaßte Ausbildung der Spannmittel od.dgl.

Der Begriff des Werkzeughalters umfaßt alle Elemente die für die Durch Führung von Bearbeitungsoperationen in Betracht kommen und dazu in einer Arbeitsspindel lösbar festgelegt werden sollen. Es kann sich dabei insbesondere um eine sog. Grundaufnahme handeln, die mit einem Werkzeug, einem Werkzeugträger, einer Verlängerung oder einem sonstigen Teil bestückt wird, oder auch um ein einheitliches Werkzeug.

Als elastisches Widerlager lassen sich insbesondere sog. O-Ringe oder ähnliche, als Ringfeder wirkende Elemente vorsehen. Es können aber auch Körper oder Anordnungen anderer Art in Betracht kommen, die den gleichen Zweck erfüllen.

Eine besondere Ausgestaltung des Werkzeughalters besteht darin, daß zumindest einer der beiden Konusringe geschlitzt ist. Je nach den Umständen kann es vorteilhaft sein, wenn beide Konusringe geschlitzt sind. Durch entsprechende Bemessung einer zylindrischen Führungsfläche am Schaftteil und der Innenfläche des Konusringes läßt sich erreichen, daß der letztere unter leichter Vorspannung auf den Schaftteil aufschiebbar ist. Damit ist von vorne herein Spielfreiheit sichergestellt. Andererseits können die Bedingungen aber auch so sein, daß beim Einspannen des Werkzeughalters in der Aufnahme der Arbeitsspindel in gewissem Grade eine Verengung des betreffenden Konusringes stattfindet und dadurch jedes ggfs. vorher vorhandene Spiel eliminiert wird.

Die Schlitzausbildung läßt sich in verschiedener Weise treffen. Es kann ein von dem einen zum anderen Rand des Konusringes durchgehender Schlitz vorhanden sein. Ferner lassen sich mehrere nicht durchgehende Einschlitzungen vorsehen, insbesondere so, daß abwechselnd Einschlitzungen von der einen und von der anderen Seite in entsprechender Anzahl und Verteilung über den Umfang hinweg vorhanden sind.

Gemäß einem weiteren Merkmal der Erfindung ist wenigstens an einer der Führungen oder Aufnahmen für einen Konusring, insbesondere an derjenigen im vorderen Bereich des Schaftteiles, ein Außengewinde vorhanden, wobei der zugehörige Konusring ein entsprechendes Innengewinde aufweist. Mit Hilfe eines solchen Gewindes ist eine Einstellung des Konusringes möglich. In vielen Fällen genügt ein sehr geringer Einstellweg. Dadurch läßt sich, namentlich bei ungünstigen Bedingungen, eine genaue Anpassung an die jeweiligen Verhältnisse erreichen, etwa dann, wenn in der kegeligen Aufnahmebohrung der Arbeitsspindel die Grenze der nach Norm zulässigen Toleranz erreicht oder sogar überschritten ist. Es kann immer eine genaue Abstimmung zwischen der Festlegung des Schaftteiles in der Arbeitsspindel und der Plananlage des Flanschteiles an deren Stirnfläche erzielt werden. Die erläuterte Ausführung ist u.a. dann von besonderer Bedeutung, wenn es sich um schwere Beanspruchungen oder Kräfte in radialer Richtung handelt z. B. bei Fräsoperationen mit aufgesetztem Werkzeug.

Die Einstellbarkeit eines Konusringes mittels eines Gewindes kommt in erster Linie für den vorderen Konusring in Betracht, wobei der hintere Konusring vorteilhaft auf seiner zylindrischen Führungsfläche frei verschiebbar ist, also ohne Gewinde. Es kann aber auch Fälle geben, in denen es zweckmäßig ist, bei beiden Konusringen ein Einstellgewinde vorzusehen.

Es kann genügen, außer dem Gewinde eine einzige zylindrische Führungsfläche vorzusehen. Vorteilhaft ist jedoch so wohl vor als auch hinter dem Außengewinde des Schaftteiles auf diesem je eine zylindrische Führungsfläche vorhanden, wobei der Konusring entsprechende zylindrische Innenflächen aufweist. Der Konusring ist dadurch vor und hinter dem Gewinde genau geführt. Die Führungsflächen haben unterschiedliche Durchmesser, sodaß sich eine abgestufte Anordnung ergibt.

Das elastische Widerlager, etwa ein O-Ring, kann bei einem mit Gewinde versehenen Konusring zugleich als Verdrehsicherung dienen. Die Anordnung wird vorteilhaft so getroffen, daß das Widerlager durch den mit seiner Stirnfläche an ihm anliegenden Konusring in dem ganzen durch das Gewinde gegebenen Schraubbereich unter Druckbelastung steht. Die übrigen Maße sind hier wie auch sonst so abgestimmt, daß innerhalb des Federweges des Widerlagers die gewünschte sichere Anlage sowohl in der kegeligen Aufnahmebohrung der Arbeitsspindel als auch an deren Planfläche zustande kommt.

Bei der rückwärtigen Anlage des Flanschteiles des Werkzeughalters an der stirnseitigen Planfläche einer Arbeitsspindel kann in üblicher Weise metallischer Kontakt bestehen, sei es vollflächig, sei es insbesondere in einem radial außen gelegenen ringförmigen Abstützbereich. Bei großen Quer- und Biegekräften kann es zweckmäßig sein, die Abstützfläche bzw. deren Außendurchmesser gleich dem Durchmesser der Arbeitsspindel vorzusehen, bei der der Werkzeughalter verwendet werden soll.

Gemäß einem weiteren Merkmal, dem auch selbständige Bedeutung zukommt, ist der Flanschteil des Werkzeughalters wenigstens teilweise mit einem schwingungsdämpfenden Belag versehen. Dies kann u.a. günstig sein bei der Durchführung von Ausbohrarbeiten, bei denen zwar verhältnismäßig geringe Kräfte vorhanden sind, aber die Gefahr des Auftretens von Ratterschwingungen besteht, die zu dämpfen bzw. zu unterdrücken sind.

Für den Belag können verschiedene Materialien in Betracht kommen. Vorzugsweise besteht der Belag aus Kunststoff, etwa Hart-PVC oder PTFE bzw. einem Kunststoff auf der Basis von PTFE. Es kann sich insbesondere um ein Material handeln, wie es für Führungsbahnen von Werkzeugmaschinen bekannt ist.

Durch die Wahl bzw. Einstellung des Materials sowie dessen Dimensionierung läßt sich eine Anpassung an die jeweiligen Erfordernisse erreichen. So bereitet es keine Schwierigkeiten, z. B. einen Belag vorzusehen, der geeignet ist, mittelfrequente Schwingungen im wichtigen Bereich von 500 bis 1000 Hz zu dämpfen.

Weitere Einzelheiten und Vorteile der Erfindung ergeben sich aus der nachstehenden Erläuterung von Ausführungsbeispielen und aus der zugehörigen Zeichnung. Es zeigen:

Fig. 1   einen axialen Längsschnitt durch einen Werkzeughalter mit dem vorderen Teil einer Arbeitsspindel,

Fig. 2   und 3 die Konusringe des Werkzeughalters nach Fig. 1 jeweils in Ansicht,

Fig. 4   eine andere Ausführung eines Konusringes in Teilansicht,

Fig. 5   eine andere Ausführung des Flanschteiles, zum Teil im Schnitt und

Fig. 6   eine weitere Ausführung eines Konusringes und seiner Aufnahmnestelle, teils im Schnitt.

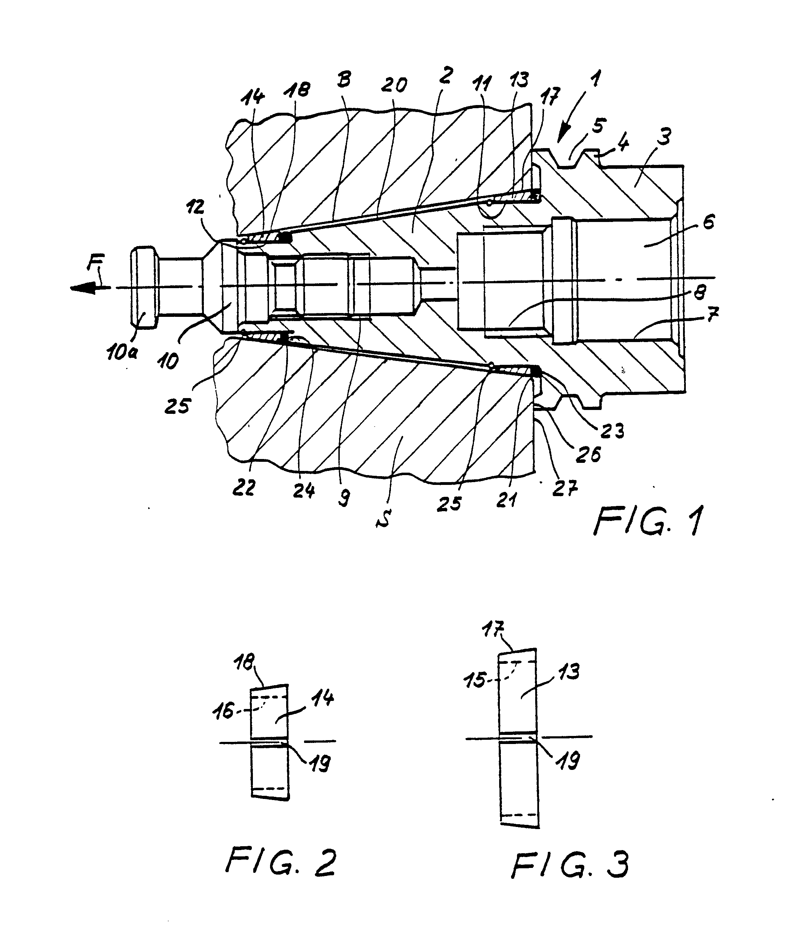

In Fig. 1 ist ein Werkzeughalter in Form einer sog. Grundaufnahme 1 in einer Position gezeigt, in der er in die kegelige Aufnahmebohrung B einer Arbeitsspindel S einer Werkzeugmaschine, z. B. eines Bohrwerks, eines Bearbeitungszentrums od. dgl. eingefügt ist. Der Werkzeughalter ist zur Verwendung bei einem automatischen Werkzeugwechselsystem geeignet und weist einen Schaftteil 2 von kegeliger Gestalt und einen dessen Fortsetzung nach vorne hin bildenden Flanschteil 3 auf. Der letztere hat einen Ringflansch 4 mit einer Umfangsnut 5 zum Erfassen durch den Greifer des Werkzeugwechselsystems. Der Ringflansch 4 kann außerdem in üblicher Weise an zwei einander gegenüberliegenden Stellen Ausnehmungen zum Eintritt von an der Spindel befindlichen Mitnehmersteinen aufweisen. Der Werkzeughalter 1 ist außerdem mit einer von seiner Vorderseite ausgehenden Bohrung 6 versehen, die einen zylindrischen Sitz 7 und einen dahinter liegenden Gewindeteil 8 aufweist. Dadurch können entsprechend ausgebildete Werkzeuge, Fräsdorne, Verlängerungen oder andere Arbeitselemente sicher und genau in der Grundaufnahme 1 gehalten werden.

In eine rückwärtige Bohrung 9 des Schaftteiles 2 ist ein Bolzen l0 eingeschraubt, an dessen pilzartigem Ende 10a eine Spannzange od.dgl. einer in der Arbeitsspindel S vorgesehenen, nicht dargestellten Spanneinrichtung bekannter Ausbildung angreifen kann, um den Werkzeughalter 1 im Sinne des Pfeiles F in die Aufnahmebohrung B hineinzuziehen und in dieser zu spannen.

Der Schaftteil 2 weist an seinem vorderen und an seinem hinteren Ende je eine genau bearbeitete Führungsfläche 11 bzw. 12 als Sitz für einen darauf verschiebbaren Konusring 13 bzw. 14 auf (vgl. auch Fig. 2 und 3). Jeder dieser Konusringe hat eine zylindrische Bohrung 15 bzw. 16 mit entsprechender Passung bezüglich des Sitzes 11 bzw. 12 und ist mit einer konischen Außenfläche 17 bzw. 18 versehen.

Der Neigungswinkel dieser Außen Flächen ist gleich dem Neigungswinkel der kegeligen Aufnahmebohrung B der Arbeitsspindel S. Bei der dargestellten Ausführung ist jeder Konusring 13 bzw. 14 geschlitzt, d.h. an einer Stelle des Umfanges ist jeweils ein durchgehender Längsschlitz 19 vorhanden (Fig. 2 und 3).

Im Bereich zwischen den beiden zylindrischen Sitzen 11 und 12 hat der Schaftteil 2 eine kegelige Form, wobei die Außenabmessungen dieser Kegel Fläche 20 etwas kleiner als die Innenabmessungen der kegeligen Aufnahmebohrung B der Arbeitsspindel sind, während der Kegelwinkel zweckmäßig der gleiche ist, so daß die Flächen beider Teile in diesem Bereich mit dem gleichen geringen Abstand voneinander konzentrisch verlaufen.

Mit den Ziffern 21 und 22 sind elastische Widerlager für die beiden Konusringe 13 und 14 bezeichnet. Bei der gezeigten vorteilhaften Ausführung sind dies Ringe aus elastischem Material, vorzugsweise einem geeigneten Kunststoff. Es lassen sich als Widerlager aber auch andere Elemente, insbesondere Federanordnungen, vorsehen. Abweichend von der Darstellung in Fig. 1 können statt der radialen Flächen 23 und 24, an denen sich die Ringe 21 und 22 abstützen, auch Nuten vorhanden sein, in denen die Widerlager teilweise Aufnahme finden. Die Konusringe 13 und 14 sind nach dem Aufschieben auf die Sitze 11, 12 durch in Umfangsnuten des Schaftteiles 2 eingelegte Ringe 25 oder andere geeignete Elemente gegen Herabgleiten nach hinten gesichert.

Wird der Werkzeughalter 1 z. B. mittels eines Werkzeugwechslers in die Aufnahmebohrung B der Arbeitsspindel eingeführt und dann von einer am Kopf 10a des Bolzens 10 angreifenden Spanneinrichtung erfaßt und in die Aufnahmebohrung B hineingezogen, so kommen zunächst die Konusringe 13 und 14 zur Anlage an der Kegelfläche der Aufnahmebohrung B. Weil die Konusringe 13 und 14 unabhängig voneinander auf ihren Sitzen 11 und 12 verschiebbar sind, werden auch Toleranzen im Kegelwinkel der einander zugeordneten Flächen ausgeglichen. Es ist damit sichergestellt, daß der Werkzeughalter im Bereich der Konusringe zur einwandfreien Anlage an der Aufnahme der Arbeitsspindel kommt. Durch weiteres Hereinziehen des Werkzeughalters in die Spindel werden die elastischen Widerlager 21 und 22 je nach den Gegebenheiten um einen gewissen Betrag zusammengedrückt bzw. weiter verspannt, und zwar so lange, bis eine ebene Ringfläche 26 an der Rückseite des Flanschteiles 3 zur Anlage an der stirnseitigen Planfläche 27 der Arbeitsspindel S kommt. Die Federkraft der Widerlager 21 und 22 bewirkt gleichzeitig ein festes Andrücken der Konusringe 13, 14 an die Innenkegelfläche der Aufnahmebohrung B. Falls ein gewisses geringes Spiel zwischen einem Konusring 13 bzw. 14 und dem zugehörigen Sitz 11 bzw. 12 vorhanden gewesen sein sollte, hat die Verspannung durch die Widerlager 21, 22 gleichzeitig eine Verengung einer oder beider Kegelhülsen 13 bzw. 14 zur Folge, so daß dadurch jedes Spiel völlig eliminiert wird. Die Bemessung läßt sich aber auch so vornehmen, daß der betreffende Konusring von vornherein unter Vorspannung auf seinen Sitz aufgeschoben wird.

In Fig. 4 ist ein Teil eines Konusringes 28 gezeigt, der in abwechselnder Aufeinanderfolge Einschlitzungen 29 jeweils von dem einen und dem anderen Rand des Ringes ausgehend aufweist. Die Zahl und Größe sowie die Tiefe dieser Einschlitzungen läßt sich so wählen, daß die für den jeweiligen Fall optimalen Eigenschaften des Konusringes erreicht werden. Außer den dargestellten Anordnungen sind auch noch weitere Schlitzausbildungen möglich, insbesondere in Form eines "H".

In Fig. 5 ist eine Ausführung eines Werkzeughalters 31 dargestellt, bei dem im Gegensatz zu der Ausführung nach Fig. 1 keine unmittelbare metallische Berührung zwischen dem Flanschteil 3 und der stirnseitigen Plan Fläche 27 der Arbeitsspindel S gegeben ist, sondern die Anlage über einen schwingungsdämpfenden Belag 30 aus Kunststoff erfolgt, der an einer rückseitigen Ringfläche des Flanschteiles 3 befestigt ist, beispielsweise durch Kleben. Im übrigen gilt das in Verbindung mit Fig. 1 Gesagte auch hier entsprechend. Eine Kegelhülse 13 mit ihrem elastischen Widerlager 21 ist auch in Fig. 5 erkennbar.

Bei der Ausführung nach Fig. 6 sind gleiche oder einander entsprechende Teile mit den gleichen Bezugsziffern wie in Fig. 1 bezeichnet. Der auch hier in seiner in die Aufnahmebohrung B einer Arbeitsspindel S eingesetzten Position gezeigte Werkzeughalter 1' mit Schaftteil 2' und Flanschteil 3' ist im vorderen Bereich des Schaftteiles 2' mit einem Außengewinde 32 versehen, das zweckmäßig eine verhältnismäßig kleine Steigung hat. Vor und hinter diesem Gewinde befinden sich zwei genaue zylindrische Führungsflächen 11a und 11b, von denen die Führungsfläche 11a einen kleineren und die Führungsfläche 11b einen größeren Außendurchmesser als das Gewinde 32 hat.

Ein Konusring 33 mit kegeliger Außenfläche 17 weist zwei den Führungsflächen 11a und 11b mit entsprechender Passung zugeordnete zylindrische Bohrungen 15a und 15b unterschiedlichen Durchmessers auf, zwischen denen ein in das Außengewinde 32 des Schaftteiles 2' eingreifendes Innengewinde 34 vorgesehen ist. Mit seiner Stirnseite liegt der Konusring 33 auch hier an einem elastischen Widerlager 21 in Form eines O-Ringes od. dgl. an. Die Bedingungen sind so gewählt, daß in dem auf das Gewinde 32 aufgeschraubten Zustand des Konusringes 33 und in dem dabei ausnutzbaren Bereich für die axiale Einstellung des Konusringes 33 das Widerlager 21 immer druckbelastet ist bzw. unter Vorspannung steht. Dadurch ist außer der Erzielung der Spielfreiheit und einer einwandfreien Anpassung an die bei einer bestimmten Maschine gegebenen Verhältnisse beim Einsatz des Werkzeughalters auch eine Sicherung gegen Verdrehen des Konusringes 33 auf dem Schaftteil 2' gegeben, wenn der Werkzeughalter 1' nach einer Arbeitsoperation aus der Spindel herausgenommen und z. B. bis zum nächsten Einsatz in einem Magazin abgelegt wird.

Am hinteren Ende des Schaftteiles 2' kann ebenfalls ein mit Gewinde versehener Konusring in entsprechender oder ähnlicher Anordnung und Ausbildung, wie es in Fig. 6 für den vorderen Konusring gezeigt ist, vorgesehen sein. Mit besonderem Vorteil wird jedoch für den hinteren Konusring eine frei verschiebbare Anordnung gewählt, namentlich so wie es in Verbindung mit Fig. 1 für den hinteren Konusring 14 erläutert ist.

## Patentansprüche

1. Werkzeughalter od.dgl. mit einem in eine kegelige Aufnahme der Arbeitsspindel einer Werkzeugmaschine einfügbaren und darin einspannbaren Schaftteil, der in seinem vorderen Bereich eine zylindrische Führung für einen an einem elastischen Widerlager axial abstützbaren Konusring aufweist, und mit einem die vordere Fortsetzung des Schaftteiles bildenden Flanschteil, der an einer stirnseitigen Planfläche der Arbeitsspindel zur Anlage bringbar ist, dadurch gekennzeichnet, daß im hinteren Bereich des Schaftteiles (2, 2') eine zweite zylindrische Führung (12) für einen zwei an einem weiteren elastischen Widerlager (22) axial abstützbaren Konusring (14) vorgesehen ist.

2. Werkzeughalter nach Anspruch 1, dadurch gekennzeichnet, daß zumindest einer der Konusringe (13, 14, 28, 33) geschlitzt ist.

3. Werkzeughalter nach Anspruch 2, gekennzeichnet durch einen durchgehenden Schlitz (19) im Konusring (13, 14).

4. Werkzeughalter nach Anspruch 2, gekennzeichnet durch mehrere, sich jeweils nur über einen Teil der Breite des Konusringes (28) erstreckende Einschlitzungen (29).

5. Werkzeughalter nach einem der Ansprüche 1 bis 4, dadurch gekennzeichnet, daß wenigstens an der im vorderen Bereich des Schaftteiles (2') befindlichen Führung (11a, 11b) ein Außengewinde (32) vorgesehen ist und der zugehörige Konusring (33) ein entsprechendes Innengewinde (34) aufweist.

6. Werkzeughalter nach Anspruch 5, dadurch gekennzeichnet, daß vor und hinter dem Außengewinde (32) jeweils eine zylindrische Führungsfläche (11a und 11b) vorgesehen ist und der Konusring (33) entsprechende Innenflächen (15a und 15b) aufweist.

7. Werkzeughalter nach einem der Ansprüche 1 bis 6, dadurch gekennzeichnet, daß der Flanschteil (3) rückseitig wenigstens teilweise mit einem schwingungsdämpfenden Belag (30) versehen ist.

8. Werkzeughalter nach Anspruch 7, gekennzeichnet durch einen Belag (30) aus Kunststoff.

## Claims

1. Tool holder or similar with a shaft part which can be inserted into and clamped in a conical receptacle of the work spindle of a machine tool and which comprises in its front area a cylindrical guide for a cone ring which can be axially supported at an elastic abutment, and with a flange part which forms the front continuation of the shaft part and which can be brought to rest against a frontal end face of the work spindle, characterised in that a second cylindrical guide (12) for a second cone ring (14), which can be axially supported at a further elastic abutment (22), is provided in the rear area of the shaft part (2, 2').

2. Tool holder according to claim 1 characterised in that at least one of the cone rings (13, 14, 28, 33) is slotted.

3. Tool holder according to claim 2 characterised by a continuous slot (19) in the cone ring (13, 14).

4. Tool holder according to claim 2 characterised by a plurality of slots (29) in each case extending only over a part of the width of the cone ring (28).

5. Tool holder according to one of claims 1 to 4, characterised in that an external thread (32) is provided at least at the guide (11a 11b) disposed in the front area of the shaft part (2') and the associated cone ring (33) comprises a corresponding internal thread (34).

6. Tool holder according to claim 5, characterised in that a cylindrical guide surface (11a and 11b) is in each case provided in front of and behind the external thread (32), and the cone ring (33) comprises corresponding internal surfaces (15a and 15b).

7. Tool holder according to one of claims 1 to 6, characterised in that the flange part (3) is provided at the rear at least partially with a vibration-damping covering (30).

8. Tool holder according to claim 7, characterised by a covering (30) of plastic.

**Revendications**

1. Porte-outil ou analogue comportant, agencé de manière à pouvoir être introduit dans un logement conique de l'arbre porte-outil d'une machine-outil et à y être serré, un élément de tige qui, dans sa région antérieure, est muni d'un guide cylindrique destiné à une bague conique agencée de manière à pouvoir s'appuyer axialement contre une butée élastique et, formant le prolongement antérieur de l'élément de tige, un élément à bride qui est agencé de manière à pouvoir être mis en appui contre une surface frontale plane de l'arbre porte-outil, caractérisé en ce que, dans la région postérieure de l'élément de tige (2, 2'), il est prévu un deuxième guide cylindrique (12) qui est destiné à une deuxième bague conique (14) agencée de manière à pouvoir s'appuyer axialement contre une autre butée élastique (22).

2. Porte-outil selon la revendication 1, caractérisé en ce que l'une au moins des bagues coniques (13, 14, 28, 33) est fendue.

3. Porte-outil selon la revendication 2, caractérisé par une fente traversante (19) dans la bague conique (13, 14).

4. Porte-outil selon la revendication 2, caractérisé par plusieurs encoches (29) qui s'étendent chacune sur seulement une partie de la largeur de la bague conique (28).

5. Porte-outil selon l'une des revendications 1 à 4, caractérisé en ce que, au moins sur le guide (11a, 11b) qui se trouve dans la région antérieure de l'élément de tige (2'), il est prévu un filetage extérieur (32) et en ce que la bague conique (33) s'y rapportant est munie d'un filetage intérieur (34) correspondant.

6. Porte-outil selon la revendication 5, caractérisé en ce que, à la fois devant et derrière le filetage extérieur (32), il est prévu une surface de guidage cylindrique (11a et 11b) et la bague conique (33) est munie de surfaces intérieures (15a et 15b) correspondantes.

7. Porte-outil selon l'une des revendications 1 à 6, caractérisé en ce que, au moins sur une partie de sa face postérieure, l'élément (3) à bride est muni d'une garniture (30) d'amortissement de vibrations.

8. Porte-outil selon la revendication 7, caractérisé par une garniture (30) en matière plastique.

FIG. 1

FIG. 2

FIG. 3